# EUROPEAN PATENT APPLICATION

(11) **EP 2 568 405 A1**
(43) Date of publication of application: **13.03.2013**
(21) Application number: 11777159.2
(22) Date of filing: 03.05.2011
(51) Int. Cl.: G06F 21/00

(54) **AUTHENTICATION METHOD AND SYSTEM FOR ONLINE GAME**

(30) Priority: 03.05.2010 US 772447
(71) Applicant: Gsimedia Corporation, Cayman Islands, B.W. I. (KY)
(72) Inventor: LIN, Hui, Taipei 114 (TW)
(74) Representative: Beetz & Partner
(86) International application number: PCT/CN2011/073606
(87) International publication number: WO 2011/137738

(57) **Abstract**

Embodiments of an authentication technique for online gaming are provided. In one aspect, an authentication method for online gaming includes storing a user identity of a user in a portable data storage device; providing access to the user identity for an authentication server to authenticate the user such that the authentication server allows the user to participate in online gaming when the user is authenticated; and when the online gaming continues, providing access to the user identity for the authentication server to validate the authenticity of the user at a first threshold time after the user identity is accessed previously.

## Description

### BACKGROUND

An online game generally refers to an interactive, multimedia game played over some form of computer network by one, two, or more people. The types of online games usually include battles and strategies, movements and actions, sports and competition, wrestling and fights, etc.

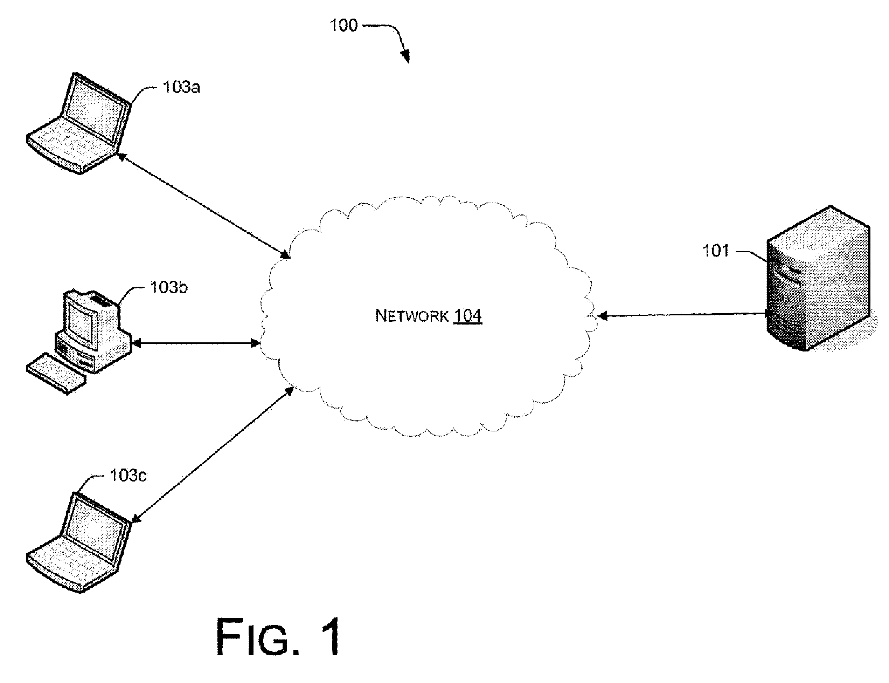

FIG. 1 illustrates a conventional online gaming system 100. The system 100 includes a server 101 set up by an online gaming vendor (hereinafter referred to as the official online gaming server 101) that provides the online game(s). The system 100 also includes one or more user terminals 103a-c and a network 104, such as the Internet for example. Online gaming is achieved with the one or more user terminals 103a-c connected to the official online gaming server 101 through the network 104. In particular, players must purchase authorization certificates from the online gaming vendor in order to connect to the official online gaming server 101, via the one or more user terminals 103a-c, to play the online game(s). Accordingly, the online gaming vendor and the players each have respective rights and obligations.

Unfortunately, there have been cases in which unauthorized individuals illegally obtained the source codes or binary codes from the official online gaming server 101, analyzed the behaviors of online gaming software or formats of the data being transmitted over the network, thereby constructing the online gaming server's schema codes and executables to set up unauthorized non-official game server(s). When players are connected to the network 104, the players are either unknowingly or induced to be connected to the non-official game server(s) where the players are provided with services, e.g., online games, equivalent to those provided by the official online gaming server 101. This allows the operators of the non-official game server(s) to profit from online gaming at the expense of the vendors of the official online gaming server 101. Other negative impacts include the tampering of confidential information of the online gaming vendor as well as the players, deprivation of the players' opportunity to connect to and obtain services from the online gaming vendor, damage to the reputation of the online gaming vendor, loss of credibility and business on the part of the online gaming vendor, and negative impact on the operations and development of the online gaming industry as a whole.

Furthermore, for whatever reason it may be, some players may be tempted to use external programs, which can make logic computations faster than human brains, to defeat an opponent player easily. Such unfair practice defeats the purpose of fair competition in online gaming, tends to shorten the life cycle of an affected online game, and impacts the trust of players in the fairness of online gaming. Again, this negatively impacts the operations and development of the online gaming industry.

### SUMMARY

In one aspect, an authentication method for online gaming stores a user identity of a user in a portable data storage device. Access to the user identity is provided for an authentication server to authenticate the user such that the authentication server allows the user to participate in online gaming when the user is authenticated. When the online gaming continues, access to the user identity is provided for the authentication server to validate the authenticity of the user at a first threshold time after the user identity is accessed previously.

In one embodiment, the portable data storage device may be a Secure Digital (SD) memory card. The user identity may be encrypted when the user identity is stored in the portable data storage device. Further, the user identity may be encrypted with a private key. The user identity may include at least a username of the user, a password of the user, or a combination of the username and the password of the user.

In another aspect, an authentication method for online gaming receives a user identity of a user, the user identity stored in a portable data storage device. The user is authenticated based on the user identity. The user is allowed to participate in online gaming when the user is authenticated based on the user identity. However, the user is disallowed to participate in online gaming when the user is not authenticated based on the user identity. The authenticity of the user is validated at a first threshold time after the user is authenticated. The user is allowed to continue to participate in online gaming when the authenticity of the user is validated within a second threshold time. Otherwise, the user is disallowed to continue to participate in online gaming when the authenticity of the user is not validated within the second threshold time.

In one embodiment, the received user identity includes an encrypted user identity of the user, which may be encrypted with a private key. Accordingly, the method decrypts the user identity before authenticating the user based on the user identity. The user identity may include at least a username of the user, a password of the user, or a combination of the username and password of the user.

In one embodiment, when disallowing the user to participate in online gaming when the user is not authenticated based on the user identity, a signal is transmitted to a user terminal corresponding to the user such that the user is prevented from participating in online gaming via the user terminal.

In yet another aspect, an authentication method for online gaming stores a user identity of a user in a portable data storage device. Access to the user identity is provided for an authentication server to authenticate the user such that the authentication server allows the user to participate in online gaming when the user is authenticated. When the online gaming continues, access to the user identity is provided for the authentication server to validate the authenticity of the user at a first threshold time after the user identity is accessed previously. A signal is received when authenticity of the user is validated within a second threshold time. The user is disallowed to participate in online gaming in response to the signal.

In one embodiment, the portable data storage device may be a SD memory card. The user identity may be encrypted when the user identity is stored in the portable data storage device. The encryption may be done with a private key. The user identity may include at least a username of the user, a password of the user, or a combination of the username and the password of the user.

This summary is provided to introduce concepts relating to authentication for online gaming. These techniques are further described below in the detailed description. This summary is not intended to identify essential features of the claimed subject matter, nor is it intended for use in determining the scope of the claimed subject matter.

### BRIEF DESCRIPTION OF THE DRAWINGS

The detailed description is described with reference to the accompanying figures. In the figures, the left-most digit(s) of a reference number identifies the figure in which the reference number first appears. The same reference numbers in different figures indicate similar or identical items.

FIG. 1 illustrates a conventional online gaming system.

FIG. 2 illustrates an online gaming system in accordance with the present disclosure.

FIG. 3 illustrates a first authentication process for online gaming in accordance with the present disclosure.

FIG. 4 illustrates a second authentication process for online gaming in accordance with the present disclosure.

FIG. 5 illustrates a third authentication process for online gaming in accordance with the present disclosure.

FIG. 6 illustrates a fourth authentication process for online gaming in accordance with the present disclosure.

### DETAILED DESCRIPTION

### Overview

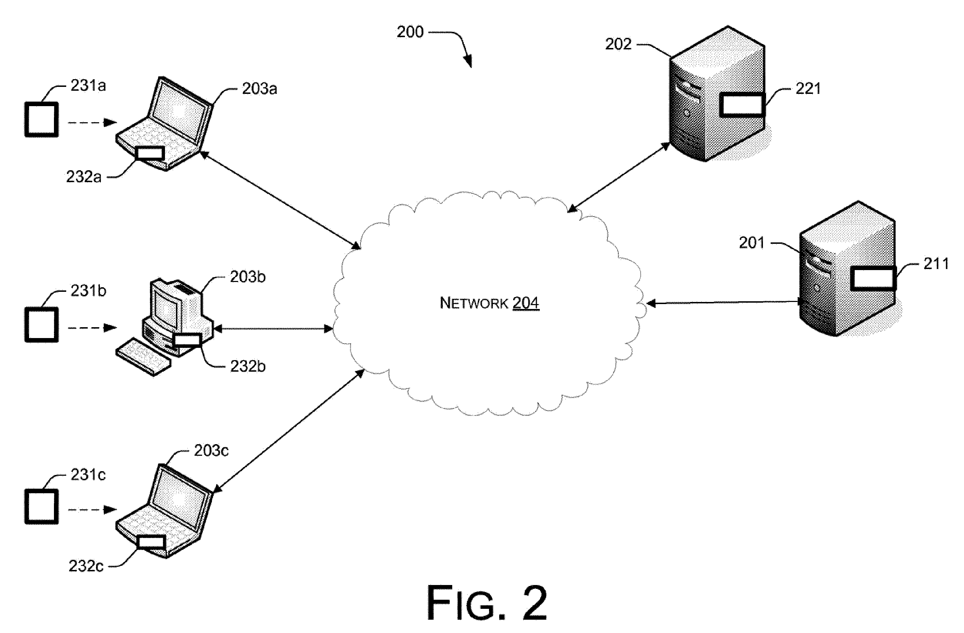

The present disclosure describes techniques for authentication for online gaming FIG. 2 illustrates an online gaming system 200 according to one embodiment. The system 200 includes an official online gaming server 201, an authentication server 202, one or more user terminals 203a-c, and a network 204 which may be a local area network or a wide area network such as the Internet. The official online gaming server 201, the authentication server 202, and the one or more user terminals 203a-c are each connected to the network 204. Although there are three user terminals shown in FIG. 2--namely user terminals 203a, 203b and 203c--there may be fewer or more user terminals in various embodiments. For illustrative purpose only, the user terminals 203a-c are shown and described herein.

The official online gaming server 201 includes an entry unit 211, which operates in conjunction with the central processing unit (CPU) of the official online gaming server 201 to control access to information related to games stored in the official online gaming server 201.

The authentication server 202 is communicatively coupled to the official online gaming server 201 via the network 204, and includes an authentication unit 221 that exchanges data with the entry unit 211 of the official online gaming server 201. The authentication unit 221 operates in conjunction with the CPU of the authentication server 202 to determine the identity of players.

Each of the user terminals 203a-c includes a respective instance of gaming software 232a-c. Moreover, each of the user terminals 203a-c is provided with a respective portable data storage device 231a-c. In one embodiment, each portable data storage device 231a-c is a Secure Digital (SD) non-volatile memory card, such as the GSiSD memory card from GSiMedia. Each portable data storage device 231a-c includes a private key-encrypted identity of the player whom the respective portable data storage device 231a-c belongs to. In operation, the portable data storage device 231a-c is inserted in the respective user terminal 203a-c and is in communicatively coupled to the authentication entry 221 of the authentication server 202 via the network 204. Likewise, each of the user terminals 203a-c is communicatively coupled to the official online gaming server 201 via the network 204.

In one embodiment, each instance of the gaming software 232a-c includes executable instructions that allow either of the official online gaming server 201 and the authentication server 202 to stop the execution of the gaming software 232a-c.

### Illustrative Operations

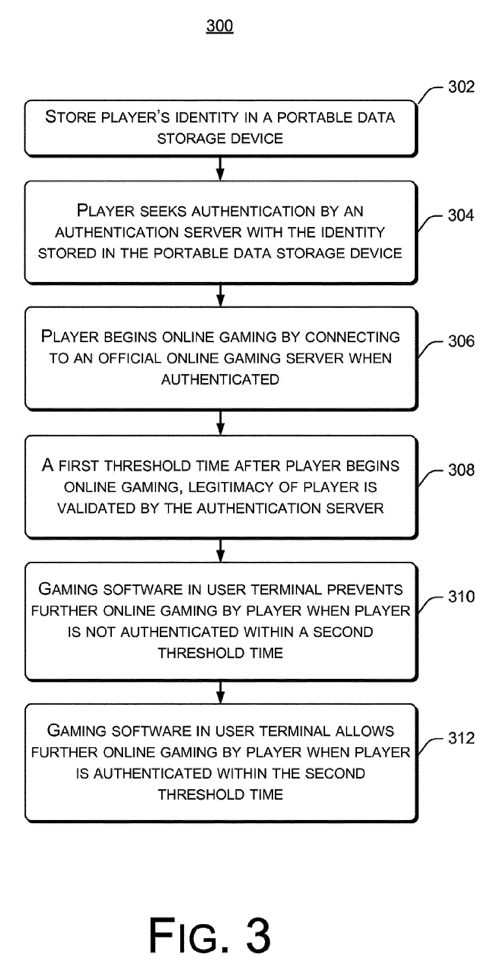

FIG. 3 illustrates an authentication process 300 for the online gaming system 200 according to one embodiment. At 302, a player stores in the respective portable data storage device 231a-c at least the player's username, password, or a combination of the username and password, as the player's identity that is encrypted by a private key. At 304, through the respective user terminal 203a-c and the network 204, the player seeks authentication by the authentication server 202 with the identity that is encrypted with the private key and stored in the respective portable data storage device 231a-c. At 306, once authenticated by the authentication server 202, the player beings online gaming by utilizing the information related to games stored in the official online gaming server 201. At 308, the respective gaming software 232a-c, at a first threshold time after the onset of the online gaming by the player, transmits encrypted data stored in the respective portable data storage device 231a-c to the authentication server 202 for validation of the player's authenticity and legitimacy. The authentication server 202 issues an authentication token when the authentication server 202 validates that the player is legitimate. At 310, when the authentication server 202 does not issue an authentication token within a second threshold time, then the gaming software 232a-c in the respective user terminal 203a-c executes certain procedures to either prevent the player from playing the online game completely or renders it difficult for the player to continue to play the online game. At 312, when the authentication server 202 validates the player and issues an authentication token within the second threshold time, then the player is allowed to continue to play the online game using the respective user terminal 203a-c.

In order for the official online gaming server 201 to launch a game stored therein for one or more players to play, the official online gaming server 201 must first obtain authentication-related information from the authentication server 202 indicative of the authentication of the one or more players. In particular, the official online gaming server 201 may not launch the game unless the identity of the player stored in the respective portable data storage device 231a-c is decrypted and authenticated by the authentication server 202, which informs the official online gaming server 201 of the result of the authentication. In one embodiment, the portable data storage devices 231a-c are not any random memory cards but special memory cards that are recognized by the official online gaming server 201 under some prior arrangement, such as an agreement between the vendor of the portable data storage devices 231a-c and the vendor of the official online gaming server 201. The official online gaming server 201 allows online gaming to proceed when the authentication result is positive, e.g., the player is authenticated. Otherwise, online gaming by the player is not allowed to proceed when the authentication result is negative, e.g., the player is not authenticated. In one embodiment, when the player is not authenticated by the authentication server 202, either the authentication server 202 or the official online gaming server 201 transmits a signal to the respective user terminal 203a-c for the respective gaming software 232a-c to prevent the player from participating in online gaming.

Additionally, after the passage of each first threshold time, the private key-encrypted identity stored in the respective portable data storage device 231a-c at the respective user terminal 203a-c is transmitted to the authentication server 202 for validation. The player will be allowed to continue playing the online game when the authentication server 202 validates the player's identity. However, if the authentication server 202 finds discrepancies in the data received from the respective portable data storage device 231a-c or if the respective portable data storage device 231a-c is not present to provide the identity information at such time, the player is prevented from continuing to play the online game completely or from continuing to play the online game smoothly. Either the authentication server 202 or the official online gaming server 201 transmits a signal to the respective user terminal 203a-c for the respective gaming software 232a-c to prevent the player to continue participating in online gaming. The periodic validation continues so long as the online gaming continues.

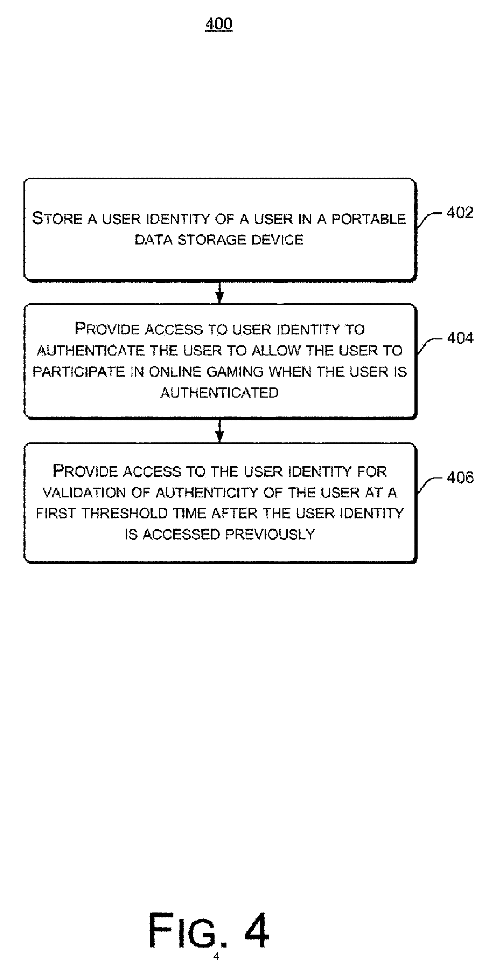

FIG. 4 illustrates an authentication process 400 for online gaming in accordance with the present disclosure. At 402, a user identity of a user is stored in a portable data storage device. At 404, access to the user identity is provided for an authentication server to authenticate the user such that the authentication server allows the user to participate in online gaming when the user is authenticated. At 406, when the online gaming continues, access to the user identity is provided for the authentication server to validate the authenticity of the user at a first threshold time after the user identity is accessed previously.

In one embodiment, the portable data storage device may be a Secure Digital (SD) memory card. In one embodiment, the user identity may be encrypted when the user identity is stored in the portable data storage device. Further, the user identity may be encrypted with a private key. The user identity may include at least a username of the user, a password of the user, or a combination of the username and the password of the user.

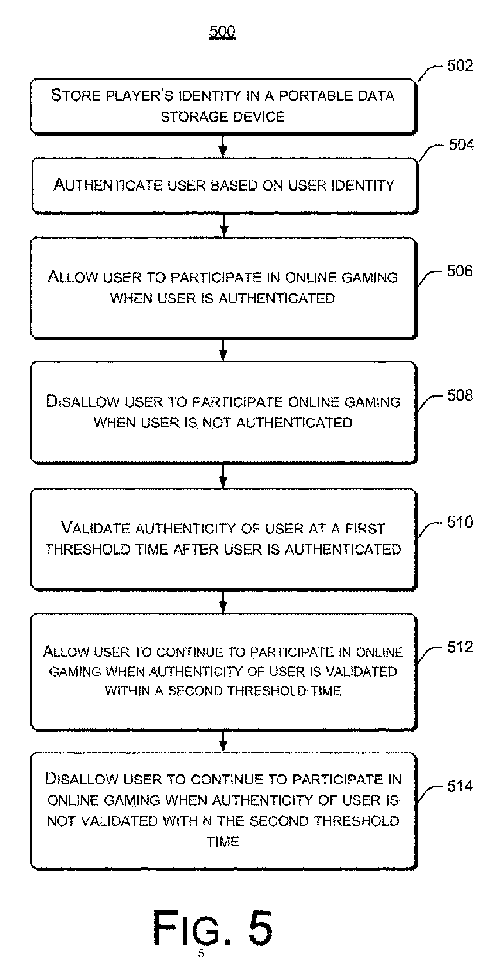

FIG. 5 illustrates an authentication process 500 for online gaming in accordance with the present disclosure. At 502, a user identity of a user stored in a portable data storage device is received. At 504, the user is authenticated based on the user identity. At 506, the user is allowed to participate in online gaming when the user is authenticated based on the user identity. At 508, the user is disallowed to participate in online gaming when the user is not authenticated based on the user identity. At 510, the authenticity of the user is validated at a first threshold time after the user is authenticated. At 512, the user is allowed to continue to participate in online gaming when the authenticity of the user is validated within a second threshold time. At 514, the user is disallowed to continue to participate in online gaming when the authenticity of the user is not validated within the second threshold time.

In one embodiment, the received user identity includes an encrypted user identity of the user, which may be encrypted with a private key. Accordingly, the method decrypts the user identity before authenticating the user based on the user identity. In one embodiment, the user identity may include at least a username of the user, a password of the user, or a combination of the username and password of the user.

In one embodiment, when disallowing the user to participate in online gaming when the user is not authenticated based on the user identity, a signal is transmitted to a user terminal corresponding to the user such that the user is prevented from participating in online gaming via the user terminal.

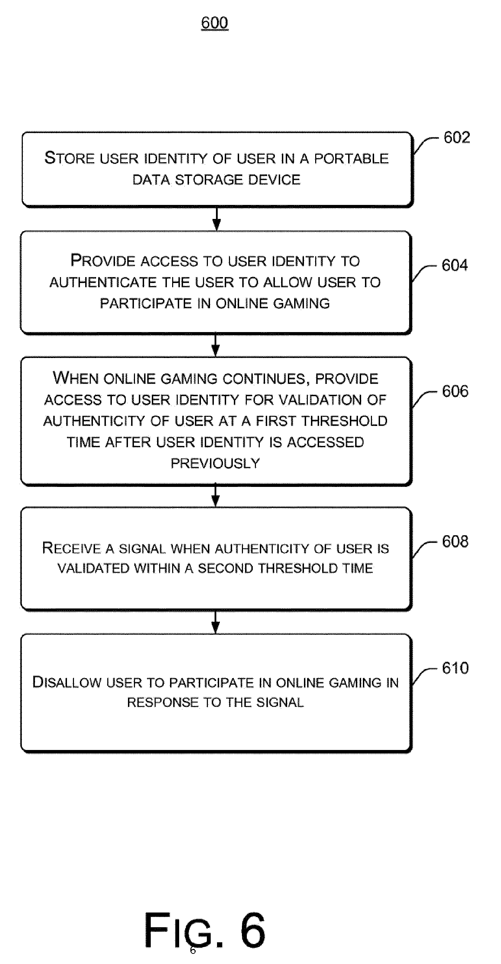

FIG. 6 illustrates an authentication process 600 for online gaming in accordance with the present disclosure. At 602, a user identity of a user is stored in a portable data storage device. At 604, access to the user identity is provided for an authentication server to authenticate the user such that the authentication server allows the user to participate in online gaming when the user is authenticated. At 606, when the online gaming continues, access to the user identity is provided for the authentication server to validate the authenticity of the user at a first threshold time after the user identity is accessed previously. At 608, a signal is received when authenticity of the user is validated within a second threshold time. At 610, the user is disallowed to participate in online gaming in response to the signal.

In one embodiment, the portable data storage device may be a SD memory card. The user identity may be encrypted when the user identity is stored in the portable data storage device. The encryption may be done with a private key. In one embodiment, the user identity may include at least a username of the user, a password of the user, or a combination of the username and the password of the user.

Accordingly, for the proposed authentication method and system to function, an online gaming system such as the system 200 needs an authentication server, such as the authentication server 202, as well as player identity storage media, such as the portable data storage devices 231a-c. The authentication server 202 plays a key role in authenticating each player that requests to participate in online gaming. The use of the portable data storage devices 231a-c permits the requirement of storing encrypted personal identity of the player thereon as well as the periodic validation of the authentication of the player after the initial authentication. The encrypted personal identity stored in the portable data storage devices 231a-c is a key component in allowing the official online gaming server 201 to launch the online games.

### Conclusion

The above-described techniques pertain to authentication for online gaming Although the techniques have been described in language specific to structural features and/or methodological acts, it is to be understood that the appended claims are not necessarily limited to the specific features or acts described. Rather, the specific features and acts are disclosed as exemplary forms of implementing such techniques. Furthermore, although the techniques may have been described in the context of SD memory cards, the techniques may be applied in any other suitable context, such as other types of portable data storage devices, for example.

## Claims

1. An authentication method for online gaming, the method comprising:
storing a user identity of a user in a portable data storage device;
providing access to the user identity for an authentication server to authenticate the user such that the authentication server allows the user to participate in online gaming when the user is authenticated; and
when the online gaming continues, providing access to the user identity for the authentication server to validate the authenticity of the user at a first threshold time after the user identity is accessed previously.

2. The method of claim 1, wherein storing a user identity of a user in a portable data storage device comprises storing the user identity of the user in a Secure Digital (SD) memory card.

3. The method of claim 1, wherein storing a user identity of a user in a portable data storage device further comprises encrypting the user identity.

4. The method of claim 3, wherein encrypting the user identity comprises encrypting the user identity with a private key.

5. The method of claim 1, wherein the user identity comprises at least a username of the user, a password of the user, or a combination of the username and the password of the user.

6. An authentication method for online gaming, the method comprising:
receiving a user identity of a user, the user identity stored in a portable data storage device;
authenticating the user based on the user identity;
allowing the user to participate in online gaming when the user is authenticated based on the user identity;
disallowing the user to participate in online gaming when the user is not authenticated based on the user identity;
validating an authenticity of the user at a first threshold time after the user is authenticated;
allowing the user to continue to participate in online gaming when the authenticity of the user is validated within a second threshold time; and
disallowing the user to continue to participate in online gaming when the authenticity of the user is not validated within the second threshold time.

7. The method of claim 6, wherein receiving a user identity of a user comprises receiving an encrypted user identity of the user, the user identity encrypted with a private key.

8. The method of claim 7, further comprising:
decrypting the user identity before authenticating the user based on the user identity.

9. The method of claim 6, wherein receiving a user identity of a user comprises receiving a user identity of the user that includes at least a username of the user, a password of the user, or a combination of the username and password of the user.

10. The method of claim 11, wherein disallowing the user to participate in online gaming when the user is not authenticated based on the user identity comprises transmitting a signal to a user terminal corresponding to the user such that the user is prevented from participating in online gaming via the user terminal.

11. An authentication method for online gaming, the method comprising:
storing a user identity of a user in a portable data storage device;
providing access to the user identity for an authentication server to authenticate the user such that the authentication server allows the user to participate in online gaming when the user is authenticated;
when the online gaming continues, providing access to the user identity for the authentication server to validate the authenticity of the user at a first threshold time after the user identity is accessed previously;
receiving a signal indicative of authenticity of the user not being validated within a second threshold time; and
disallowing the user to participate in online gaming in response to the signal.

12. The method of claim 11, wherein storing a user identity of a user in a portable data storage device comprises storing the user identity of the user in a Secure Digital (SD) memory card.

13. The method of claim 11, wherein storing a user identity of a user in a portable data storage device further comprises encrypting the user identity.

14. The method of claim 13, wherein encrypting the user identity comprises encrypting the user identity with a private key.

15. The method of claim 11, wherein the user identity comprises at least a username of the user, a password of the user, or a combination of the username and the password of the user.
